# EUROPÄISCHE PATENTSCHRIFT

(11) **EP 3 840 321 B1**
(45) Veröffentlichungstag und Bekanntmachung des Hinweises auf die Patenterteilung: **02.11.2022**
(21) Anmeldenummer: 19218178.2
(22) Anmeldetag: 19.12.2019
(51) Int. Cl.: H04L 9/40, H04W 12/02, H04W 12/06

(54) **VERFAHREN UND SYSTEM ZUR AUTHENTIFIKATION EINER MOBILE-ID MITTELS HASHWERTEN**
METHOD AND SYSTEM FOR AUTHENTICATING A MOBILE ID USING HASH VALUES
PROCÉDÉ ET SYSTÈME D'AUTHENTIFICATION D'UN ID MOBILE AU MOYEN DES VALEURS DE HACHAGE

(43) Veröffentlichungstag der Anmeldung: 23.06.2021
(73) Patentinhaber: Deutsche Telekom AG, 53113 Bonn (DE)
(72) Erfinder: STENGEL, Christian, 61191 Rosbach (DE); BREUER, Jörg, 57223 Kreuztal (DE); TÖNSING, Friedrich, 64739 Höchst (DE)
(74) Vertreter: Raible Deissler Lehmann Patentanwälte PartG mbB

(56) Entgegenhaltungen:
- WO-A1-01/43344
- US-A1- 2017 339 138
- US-A1- 2018 367 305

## Beschreibung

Die vorliegende Erfindung betrifft ein Verfahren zur Authentifikation einer Mobile-ID bzw. einer mobilen Identität mittels Hashwerten.

Die Anzahl der verfügbaren Online Dienste bzw. Services, wie bspw. Streaming, Online-Shopping, Social Media, E-Mail, Online-Banking, etc., und die Anzahl der diese Dienste zur Verfügung stellenden Serviceprovider ist riesig. Die Anzahl der Geräte, mit denen der Zugang zu diesen Diensten realisiert wird, beläuft sich hingegen nicht selten einzig auf ein Smartphone eines Nutzers. Zur Teilnahme an den Systemen werden auf diesem Smartphone elektronische Identitäten (abgekürzt eIDs) in einer mobilen Version als Mobile-IDs benötigt, um Zugang zu Online Services zu erhalten. Diese stellen eine Voraussetzung zur Teilhabe an digitalen Servicewelten dar, da ein Nutzer eine solche Mobile-ID dafür verwenden kann, sich gegenüber einer beliebigen externen Entität, wie einer Internetseite oder einer App zu authentifizieren und zu identifizieren.

Allerdings weisen heutige als sicher etablierte Identifizierungslösungen entscheidende Nachteile auf. Entweder erfordern sie eine sehr komplexe Umsetzung wie den sogenannten Extended Access Control (EAC) wie er in einer Technischen Richtlinie des Bundesamtes für Sicherheit in der Informationstechnik (BSI) mit der Bezeichnung BSI-TR03110 festgelegt ist, oder sie scheitern aufgrund der Notwendigkeit zur Geheimhaltung personenbezogener Daten an den hohen Hürden der DSGVO (abgekürzt für Datenschutz-Grundverordnung: DGSVO - VERORDNUNG (EU) 2016/679 DES EUROPÄISCHEN PARLAMENTS UND DES RATES vom 27. April 2016 zum Schutz natürlicher Personen bei der Verarbeitung personenbezogener Daten, zum freien Datenverkehr und zur Aufhebung der Richtlinie 95/46/EG). So beinhaltet ein Identifizierungszertifikat immer personenbezogene Daten, wie den Namen oder die Adresse des Nutzers, die von allen Entitäten eingesehen werden können, die Zugriff auf dieses Zertifikat erhalten.

Ein Verfahren zur Erzeugung eines Zertifikats wird bspw. in der Druckschrift DE 10 2015 207 064 A1 offenbart, wobei das Zertifikat aus einem weiteren Zertifikat aus einer Public-Key-Infrastruktur für Dokumente abgeleitet wird.

Die Druckschrift DE 10 2015 209 073 B4 beschreibt ein verbessertes Verfahren zum Lesen von Attributen aus einem ID-Token. Außerdem werden ein entsprechender ID-Token und ein Computersystem bereitgestellt.

In der Druckschrift DE 10 2015 214 340 A1 wird ein Verfahren zur Prüfung der Gültigkeit eines durch einen ID-Token eines Nutzers für einen Sicherheitstoken desselben Nutzers erzeugten Zertifikats beschrieben. Des Weiteren kann das Zertifikat für einen Sicherheitstoken eines Nutzers durch einen ID-Token desselben Nutzers erzeugt werden.

Die technische Richtlinie BSI TR-03110 - "Advanced Security Mechanisms for Machine Readable Travel Documents and eIDAS Token", spezifiziert in ihrem ersten Teil in der Version 2.20 vom 26. Februar 2015 die Sicherheitsmechanismen für maschinenlesbare Reisedokumente und eIDAS Token. Die Spezifikation bildet insbesondere die Grundlage für die Sicherheitsmechanismen des deutschen Personalausweises und des Aufenthaltstitels sowie europäischer Reisepässe und Führerscheine. Im zweiten Teil in der Version 2.21 vom 21. Dezember 2016 werden Protokolle zur elektronischen Identifikation, Authentifikation und Trust Services (eIDAS) spezifiziert.

Vor diesem Hintergrund ist es eine Aufgabe der vorliegenden Erfindung, ein Verfahren zur Authentifikation einer mobilen Identität bereitzustellen, bei dem die Identität eines Nutzers mittels eines einzigen Zertifikats authentifiziert werden kann. Ein dazu notwendiger Schlüssel soll DSGVO-konform realisierbar sein.

Im Folgenden werden zunächst einige für den Offenbarungsgehalt der Erfindung wichtige Begriffe definiert.

Entität: Eindeutig identifizierbares Informationsobjekt, welches Daten anfordern und/oder verarbeiten und/oder weitergeben kann.

Einwegwert, bspw. Hashwert: Durch eine Einwegfunktion, bspw. eine Hashfunktion, wird eine große Eingabemenge auf eine kleinere Zielmenge abgebildet, die sogenannten Einwegwerte (Hashwerte bei der Hashfunktion). Die Einwegfunktion wird im Zusammenhang mit der Erfindung als nicht-injektiv gewählt und führt ausschließlich nicht-injektive Abbildungen aus. Die Eingabemenge kann Elemente unterschiedlicher Länge (bspw. an Zeichen) beinhalten, die Zielmenge weist dagegen immer eine gleich feste Länge (bspw. an Ziffern) auf.

Identität (ID): Sammlung von personenbezogenen Attributen, welche eine Person/Nutzer eindeutig identifizieren.
ID-Broker: Bildet ID-Attribute über multiple ID-Provider auf ein digitales Subjekt ab.
ID-Provider (IDP): Authentifiziert eine ID.

Mobile-ID: Identität, welche eine Identifizierung des Nutzers im mobilen Betrieb ermöglicht.

Mobile-ID-Zertifikat: Zertifikat aus anonymisierten personenbezogenen Informationen, welche bspw. Attributen aus einem Personalausweis oder einem Führerschein oder einer Gesundheitskarte entnommen werden.

X.509: Ist ein ITU-T-Standard für eine Public-Key-Infrastruktur zum Erstellen digitaler Zertifikate.

Zur Lösung der voranstehend genannten Aufgabe wird ein Verfahren zur Authentifikation einer Mobile-ID vorgeschlagen, bei dem die Mobile-ID auf einem Endgerät eines Nutzers bereitgestellt wird. Zuerst werden personenbezogene Informationen über den Nutzer mittels einer dem Endgerät des Nutzers und einer ersten Entität bekannten Einwegfunktion in eine anonymisierte Form gebracht und mit einem einzigen Mobile-ID-Zertifikat von dem Endgerät des Nutzers an die erste Entität übermittelt. Fortan wird mit diesem Mobile-ID-Zertifikat ein Kommunikationsaustausch zwischen dem Endgerät des Nutzers und der ersten Entität gekennzeichnet. Zu einem späteren Zeitpunkt wird dem Nutzer eine Genehmigungsmöglichkeit zur Übermittlung der personenbezogenen Informationen in nichtanonymisierter Form an die erste Entität von dem Endgerät des Nutzers bereitgestellt und durch die erste Entität anhand der ihr dann von dem Endgerät des Nutzers übermittelten nichtanonymisierten personenbezogenen Informationen eine Überprüfung deren anonymisierter Form durchgeführt. Folgende Schritte werden durchlaufen:
- Bereitstellen einer Mehrzahl von personenbezogenen Informationen über eine Identität des Nutzers als eine Mehrzahl an Attributen. Dies kann bspw. bei einer Inbetriebnahme und/oder Initialisierung des Endgerätes des Nutzers durch den Nutzer geschehen.
- Berechnen von ersten Einwegwerten mittels der Einwegfunktion auf dem Endgerät über eine den Nutzer eindeutig identifizierende Auswahl an jeweiligen Attributen aus der Mehrzahl an Attributen. Die den Nutzer eindeutig identifizierende Auswahl an jeweiligen Attributen ist bspw. durch Name, Telefonnummer und Adresse vorbestimmt;
- Bilden eines eindeutigen Merkmals, z. B. Seriennummer, durch das Endgerät;
- Bilden des Mobile-ID-Zertifikates mit der eindeutigen Seriennummer und mindestens einem anonymisierten Informationsfeld (AIF), in dem die ersten Einwegwerte abgelegt sind;
- Übermitteln des Mobile-ID-Zertifikates von dem Endgerät des Nutzers an die erste Entität;
- Erstellen eines sicheren Kommunikationskanals zwischen dem Endgerät des Nutzers und der ersten Entität und/oder Authentifizieren von Kommunikationsdaten mit dem Endgerät des Nutzers durch die erste Entität mittels des übermittelten Mobile-ID-Zertifikates;
- Abfragen einer Genehmigung des Nutzers auf einer Ausgabeeinheit des Endgerätes zu einer Übermittlung personenbezogener Informationen in nichtanonymisierter Form von dem Endgerät des Nutzers an die erste Entität;
- Genehmigen durch den Nutzer auf einer Eingabeeinheit des Endgerätes und Übermitteln personenbezogener Informationen in nichtanonymisierter Form von dem Endgerät des Nutzers an die erste Entität;
- Identifizieren des Nutzers durch die erste Entität mittels mit der Einwegfunktion nachberechneter zweiter Einwegwerten und deren Abgleich mit den ersten Einwegwerten.

Das erfindungsgemäße Verfahren stellt damit eine mobile Identität bereit, welche sich auf einfache Weise mittels eines einzigen Zertifikates zur Authentifikation bzw. zu einer Identifizierung und ggf. zu einer Bereitstellung zugehöriger Schlüssel DSGVO-konform realisieren lässt. Der das erfindungsgemäße Verfahren auf seinem Endgerät ausführende Nutzer kann sich daher vorteilhaft gegenüber einer beliebigen ersten Entität bzw. externen ersten Entität, wie einer Internetseite oder einer App authentifizieren und identifizieren, ohne dass dabei zunächst die Identität des Nutzers an sich oder weiterer die Identität des Nutzers betreffender Daten übermittelt werden, sondern nur anonymisierte Daten in Form von Einwegwerten.

Das Mobile-ID-Zertifikat bildet eine signierte Information. Wird der Kommunikationsaustausch mittels einem nach dem ITU-T-Standard gebildeten Mobile-ID-Zertifikat, bspw. einem X.509-Zertifikat, betrieben, so wird die eindeutige Seriennummer z. B. im "SubjectDN" abgelegt, wobei die Einwegwerte z. B. bei den "SubjectAlternativeNames" eingetragen werden.

Das erfindungsgemäße Verfahren baut darauf auf, sämtliche relevanten und personenbezogenen Identifizierungsdaten, wie auch der Person zugeordnete Zusatzinformationen (z. B. Berechtigung für ein System) als Einwegwerte anonymisiert in ein Authentifikationszertifikat, nämlich in das Mobile-ID-Zertifikat zur Authentifizierung zwischen dem Nutzer und der ersten Entität einzubetten. Echtdaten können dann bei Bedarf und nach vorheriger Zustimmung des Nutzers an die externe erste Entität nachgereicht und dort geprüft werden. Zunächst kann jedoch das Mobile-ID-Zertifikat zur anonymen Authentifizierung verwendet werden, ohne der ersten Entität bei dieser Authentifizierung DSGVOrelevante Informationen übermitteln zu müssen.

Darüber hinaus genügt das erfindungsgemäße Verfahren vorteilhaft den folgenden Designgrundsätzen:
- Designgrundsatz 1: Einfachheit. Dies bedeutet, dass die Mobile-ID einfach implementierbar und auf einfache Art und Weise in bestehende Systeme integrierbar ist. Die Mobile-ID soll sich auch einfach an bestehende Systeme anbinden lassen. Dieser Designgrundsatz gilt insbesondere auch gegenüber Internetseiten und Entitäten, welche eine Identifizierung erfordern und mit der Mobile-ID einen höheren Sicherheitslevel erreichen als ohne die Mobile-ID.
- Designgrundsatz 2: Universalität und Modularität. Dies bedeutet, dass die Mobile-ID universell und in verschiedenen Szenarien einsetzbar sein soll und durch weltweite Geräte- und Browser-Standards unterstützt wird. Die Mobile-ID soll auf bestehenden Systemen mindestens in einem begrenzten Umfang ausführbar sein, wobei sich weitere Funktionen und ein Mobile-ID-Subsystem sukzessive modular ergänzen lassen sollen.
- Designgrundsatz 3: Nutzerversprechen. Dies bedeutet, dass die Mobile-ID auf einfache Weise eingerichtet werden kann und bequem und komfortabel nutzbar sein soll. Zudem soll sie leicht in ein neues ID-Broker-System und in eine Smartphone-App integrierbar sein, um ein hinreichend großes Nutzungserlebnis im Sinne eines "One-Stop-Shoppings" zu ermöglichen. Eine Verwendung soll dabei vergleichbar oder einfacher sein als eine Nutzername-Passwort-Kombination.
- Designgrundsatz 4: Multi-ID-Fähigkeit. Dies bedeutet, dass ein System, auf dem die Mobile-ID implementiert ist, multi-ID-fähig sein soll und damit eine Ableitung verschiedener Identitäten aus verschiedenen Quellen ermöglichen soll. Je nach Quelle soll der Mobile-ID dabei ein Vertrauensniveau zuweisbar sein.
- Designgrundsatz 5: Konformität zu Regularien. Dies bedeutet, dass ein weiteres System, auf dem die Mobile-ID implementiert ist, prinzipiell auf Grundlage der eIDAS-Richtlinie qualifiziert bzw. notifiziert werden kann. Zudem soll es möglich sein, das System als Spezialfall bei Nutzung eines Personalausweises zur Bereitstellung der personenbezogenen Informationen in das bestehende eID-Security-Framework nach BSI TR-03159 Mobile Identities aufzunehmen.
- Designgrundsatz 6: Hardwaresicherheit. Dies bedeutet, dass ein noch weiteres System, auf dem die Mobile-ID implementiert ist, einen Hardwareansatz zur sicheren Identifizierung und Authentifizierung unterstützen soll.

Eine dem erfindungsgemäßen Verfahren nahe Lösungsmöglichkeit ist eine Verwendung von zwei oder mehr Zertifikaten, von denen ein erstes Authentifizierungszertifikat anonym ist und zu einer Authentifizierung gegenüber einer jeweiligen externen Entität und zu einem Aufbau eines sicheren Kanals eingesetzt werden kann, während weitere Identifizierungszertifikate verschiedene Informationen über den Nutzer oder beispielsweise dem Nutzer zugeordnete Informationen enthalten können. Um jedoch der DSGVO gerecht werden zu können, dürften die weiteren Identifizierungszertifikate nicht zur Authentifizierung verwendet werden, da vor der Authentifizierung kein sicherer Kanal zur Übertragung personenbezogener Daten gegeben ist. Zudem dürfen sie nur dann an die jeweilige externe Entität weitergegeben werden, wenn der Nutzer vorher explizit der Verwendung personenbezogener Daten zugestimmt hat und diese über einen sicheren Kanal transportiert werden können. Dieser Umstand führt zu einer großen Komplexität dieses Ansatzes mit zwei oder mehreren Zertifikaten, da unter Umständen eine größere Anzahl an Zertifikaten benötigt wird und ein ID-Provider jeweils das richtige Identifizierungszertifikat an eine jeweilige externe Entität übergeben muss.

Um eine Echtheit von Daten in elektronischen Ausweisen bzw. eine Nichtmanipulation von Ausweisen nachzuweisen, ist zwar die technische Richtlinie BSI-TR03110-1 als Verfahren zu einer passiven Authentifizierung bekannt. Hierbei werden Einwegwerte aller im Ausweis hinterlegten Daten in Form von Hashwerten bei der Erstellung des Ausweises einzeln signiert, so dass eine externe Entität die Echtheit der Daten einzeln und je nach Zugriffsrecht prüfen kann. Dieses technisch auf einer Prüfung von Hashwerten aufsetzende Verfahren zur passiven Authentifizierung besteht jedoch in der einzelnen Integritätsprüfung vorliegender Echtdaten und nicht in der erfindungsgemäßen anonymisierten Übergabe von Daten in einem einzigen Zertifikat im Rahmen einer dynamischen Authentifizierung, welche vorteilhaft eine spätere Prüfung von personenbezogenen Echtdaten umfasst. Eine wie bspw. aus der BSI-TR03110-1 bekannte Identifizierungslösung weist daher entscheidende Nachteile auf und auch die im voranstehenden Absatz beschriebene Identifizierungslösung mittels zweier oder mehrerer Zertifikate erfordert zunächst die Erzeugung und Bereitstellung der benötigen Zertifikate, bei denen das Identifizierungszertifikat nur nach ausdrücklicher Zustimmung des Nutzers an die externe Entität weitergegeben werden darf. Zum einen führt dies zu einem erhöhten Aufwand beim Aufbau einer Public-Key-Infrastructure (zumeist mit PKI abgekürzt). Zum anderen kann der Nutzer nach einem solchen Mehr-Zertifikats-Modell gesichert entweder keine oder nur solche Identifizierungsdaten bereitstellen, welche im jeweiligen Zertifikat stehen.

In einer Ausführungsform des erfindungsgemäßen Verfahrens wird die erste Entität durch einen Online-Service gebildet.

In einer fortgesetzten Ausführungsform des erfindungsgemäßen Verfahrens wird der Online-Service mindestens aus folgender Liste gewählt: E-Mail, Online-Shopping, Social Media, Online-Banking, IoT, Carconnectivity, eTicketing.

In einer weiteren Ausführungsform des erfindungsgemäßen Verfahrens wird das Endgerät mindestens aus folgender Liste gewählt: Smartphone, Smartwatch, Notebook, Laptop, Tablet, Navigationsgerät, GPS-Tracker, loT-Device.

In einer anderen Ausführungsform des erfindungsgemäßen Verfahrens werden die Einwegfunktion durch eine Hashfunktion und die Einwegwerte durch Hashwerte gebildet.

In einer noch weiteren Ausführungsform des erfindungsgemäßen Verfahrens wird mindestens ein Teil der personenbezogenen Informationen aus einem Ausweisdokument entnommen, wobei das Ausweisdokument mindestens aus folgender Liste gewählt wird: Personalausweis, Reisepass, Führerschein, Gesundheitskarte, Firmenausweis, Signaturkarte, Digitaler Fahrzeugschlüssel, eTicketing-Nutzermedium, Identitätsprovider (wie z. B. Verimi), User-Account eines Onlinesystems.

In einer fortgesetzt weiteren Ausführungsform des erfindungsgemäßen Verfahrens wird mindestens ein Teil der personenbezogenen Informationen auf Grund von Auskünften des Nutzers über eine Eingabeeinheit des Endgerätes auf vorgegebene Fragen der ersten Entität, insbesondere eines jeweiligen Online-Services auf einer Ausgabeeinheit des Endgerätes gebildet, wobei die Attribute mindestens aus folgender Liste gewählt werden können: Telefonnummer, Telefonnummer als Kind, Straßenname des Elternhauses, Geburtsname der Mutter.

In einer fortgesetzt noch weiteren Ausführungsform des erfindungsgemäßen Verfahrens werden die personenbezogenen Informationen mindestens durch Attribute aus folgender Liste gebildet: vollständiger Name, Geburtsname, Geburtsdatum bzw. Geburtstag, physische private Adresse, physische berufliche Adresse, Mailadresse.

In einer anderen Ausführungsform des erfindungsgemäßen Verfahrens werden die jeweiligen Einwegwerte mit einer Maskierungsfunktion maskiert, wobei ein die Maskierungsfunktion spezifizierender Funktionsdatensatz in dem Mobile-ID-Zertifikat hinterlegt wird. Dadurch werden vorteilhaft sogenannte Codebook-Attacken verhindert, da eine jeweilige den Online-Service bereitstellende erste Entität bzw. externe erste Entität die Einwegwerte nur mittels dieses Funktionsdatensatzes und der mit dem personenbezogenen Daten übergebenen Maskierungsdaten berechnen und überprüfen kann - ein Erraten der personenbezogenen Daten und Erstellung eines diesbzgl. Codebooks wird dadurch verhindert. Werden im Anschluss an die Authentifizierung weitere Daten durch die externe Entität benötigt, so können diese nach Einwilligung des Nutzers, über den im Rahmen der Authentifizierung erstellten sicheren Kanal vor unbefugten Augen geschützt zusammen mit den Maskierungsdaten an die externe erste Entität nachgereicht werden. Die externe erste Entität kann die Daten dann durch Nachberechnung und Vergleich der jeweiligen Einwegwerte prüfen.

In einer noch anderen Ausführungsform des erfindungsgemäßen Verfahrens wird zusätzlich zu der Seriennummer und dem mindestens einen AIF eine URL in dem Mobile-ID-Zertifikat abgelegt, wobei die URL auf ein dem Nutzer zugehöriges Datenkonto auf einer externen zweiten Entität bzw. einer zweiten Entität verweist. Der Nutzer hat zuvor dritte Einwegwerte über einen dort abgelegten Extern-Datensatz dem verwendeten mindestens einen AIF des Mobile-ID-Zertifikates zugefügt. Durch die erste Entität werden vierte Einwegwerte über den unter der URL abgelegten Extern-Datensatz gebildet und mit den dritten Einwegwerten des Mobile-ID-Zertifikates verglichen.

In einer fortgesetzt anderen Ausführungsform des erfindungsgemäßen Verfahrens wird die zweite Entität durch einen externen, d. h. nicht lokal mit dem Endgerät verbundenen Datenserver oder Datenbankserver gebildet.

In einer fortgesetzt noch anderen Ausführungsform des erfindungsgemäßen Verfahrens wird der Kommunikationsaustausch mit dem Mobile-ID-Zertifikat verschlüsselt.

Ferner wird ein System zur Authentifikation einer Mobile-ID beansprucht, welches mindestens ein Endgerät eines Nutzers, eine erste Entität, eine von dem Endgerät umfasste Ausgabeeinheit und eine von dem Endgerät umfasste Eingabeeinheit aufweist. Das System ist dazu konfiguriert, die Mobile-ID auf dem Endgerät des Nutzers bereitzustellen, zuerst personenbezogene Informationen über einen Nutzer mittels einer dem Endgerät des Nutzers und der ersten Entität bekannten Einwegfunktion in eine anonymisierte Form zu bringen und mit einem einzigen Mobile-ID-Zertifikat von dem Endgerät des Nutzers zu der ersten Entität zu übermitteln, fortan mit diesem Mobile-ID-Zertifikat ein Kommunikationsaustausch mit der ersten Entität zu kennzeichnen, zu einem späteren Zeitpunkt dem Nutzer eine Genehmigungsmöglichkeit zur Übermittlung der personenbezogenen Informationen in nichtanonymisierter Form an die erste Entität bereitzustellen und durch die erste Entität anhand der ihr dann übermittelten nichtanonymisierten personenbezogenen Informationen eine Überprüfung deren anonymisierter Form durchzuführen, und dabei folgende Schritte zu durchlaufen:
- Bereitstellen einer Mehrzahl von personenbezogenen Informationen über eine Identität des Nutzers als eine Mehrzahl an Attributen;
- Berechnen von ersten Einwegwerten mittels der Einwegfunktion über eine den Nutzer eindeutig identifizierende Auswahl an jeweiligen Attributen aus der Mehrzahl an Attributen;
- Bilden einer eindeutigen Seriennummer durch das Endgerät;
- Bilden des Mobile-ID-Zertifikates mit der eindeutigen Seriennummer und mindestens einem AIF, in dem die ersten Einwegwerte abgelegt sind;
- Übermitteln des Mobile-ID-Zertifikates von dem Endgerät an die erste Entität;
- Erstellen eines sicheren Kommunikationskanals zwischen dem Endgerät des Nutzers und der ersten Entität und/oder Authentifizieren von Kommunikationsdaten mit dem Endgerät des Nutzers durch die erste Entität mittels des übermittelten Mobile-ID-Zertifikates;
- Abfragen einer Genehmigung des Nutzers auf einer Ausgabeeinheit des Endgerätes zu einer Übermittlung personenbezogener Informationen von dem Endgerät des Nutzers an die erste Entität;
- Genehmigen durch den Nutzer auf einer Eingabeeinheit des Endgerätes und Übermitteln personenbezogener Informationen von dem Endgerät des Nutzers an die erste Entität;
- Identifizieren des Nutzers durch die erste Entität mittels mit der Einwegfunktion nachberechneten zweiten Einwegwerte und deren Abgleich mit den ersten Einwegwerten.

In einer Ausgestaltung des erfindungsgemäßen Systems ist die erste Entität des Systems dazu konfiguriert, einen Online-Service bzw. einen Online-Dienst zu bilden.

In einer weiteren Ausgestaltung des erfindungsgemäßen Systems ist die Einwegfunktion eine Hashfunktion, welche dazu konfiguriert ist, Hashwerte als Einwegwerte zu bilden.

In einer Ausgestaltung des erfindungsgemäßen Systems weist dieses zusätzlich eine zweite Entität auf und ist dazu konfiguriert, zu der Seriennummer und dem mindestens einen AIF eine URL in dem Mobile-ID-Zertifikat abzulegen. Die URL verweist auf ein dem Nutzer zugehöriges Datenkonto auf der zweiten Entität und der Nutzer hat zuvor dritte Einwegwerte über einen dort abgelegten Extern-Datensatz dem mindestens einen AIF des Mobile-ID-Zertifikates zugefügt. Durch die erste Entität, welche bspw. durch den Online-Service gebildet wird, wobei der Online-Service ein Authentifizierungssystem umfassen kann, werden vierte Einwegwerte über den unter der URL abgelegten Extern-Datensatz gebildet und mit den dritten Einwegwerten des Mobile-ID-Zertifikates verglichen.

Das voranstehend beschriebene Verfahren und das voranstehend beschriebene System weisen einige entscheidende Vorteile gegenüber bisherigen Authentifizierungslösungen auf:
- Das System erfüllt sämtliche voranstehend genannten Designgrundsätze. Insbesondere ist es einfach auch mit Hardwareunterstützung umzusetzen und in bestehende Strukturen zu integrieren.
- Das System unterstützt insbesondere ein ID-Broker-System. Der ID-Broker muss hiermit einmalig die Erzeugung einer Mobile-ID anstoßen und kann dann während einer Anwendung und je nach Anwendungsfall einer den Online-Service bereitstellenden externen ersten Entität nach Zustimmung des Nutzers die für den Online-Service erforderlichen ID-Daten prüfbar bereitstellen.
- Die Prüfung von ID-Daten erfolgt über Gegenrechnung und den Vergleich eines berechneten zweiten Hashwertes mit dem Eintrag des ersten Hashwertes im Mobile-ID-Zertifikat. Da der erste Hashwert Teil des Mobile-ID-Zertifikats ist, ist es der externen ersten Entität möglich, sowohl die Integrität als auch die Authentizität der übermittelten Daten durch bereits vorhandene anonymisierte Daten aus dem Mobile-ID-Zertifikat zu prüfen. Dies ermöglicht eine einfache Identifizierung ohne größeren Overhead.
- Hashwerte haben den entscheidenden Vorteil, dass es sich um über Einwegfunktionen berechnete Einwegwerte handelt, aus denen die ursprünglichen Daten nicht hergeleitet werden können. Damit ist es möglich, personenbezogene Informationen nach einem Zero-Knowledge-Ansatz im Mobile-ID-Zertifikat zu codieren, ohne diese Daten bekannt geben zu müssen.
- Der Nutzer behält eine Datenhoheit über seine Daten, da er für jedes Datum entscheiden kann, ob dieses an die externe erste Entität weitergeleitet werden soll oder nicht. Die externe erste Entität hat umgekehrt bei allen übergebenen Daten die Möglichkeit, die Authentizität und Integrität zu prüfen und den Nutzer dadurch eindeutig identifizieren zu können.
- Selbst ohne eine spätere Übergabe personenbezogener Daten d. h. auch bei vollständig anonymer Verwendung erlaubt das System im Verdachtsfall des Missbrauchs je nach Umsetzung eine Prüfung der personenbezogenen Daten auf Seiten des Anbieters des Online-Services.

Es ist denkbar, dass bei einem Authentifizierungsvorgang eine Authentifizierungsanfrage zu einem bestimmten Anwendungsfall bzw. Usecase an die im Zertifikat genannte URL gesendet wird. Im Konto wird daraufhin geprüft, ob diese Authentifizierungsanfrage bearbeitet werden kann, d. h. ob z. B. die für den Usecase notwendigen Daten im Konto hinterlegt sind. Im positiven Fall sendet das System dann bspw. durch eine Pushnachricht eine Freigabeanforderung an den registrierten Nutzer. Wenn dieser die Daten freigibt, erhält das Authentifizierungssystem die für den Usecase relevanten Daten aus dem Konto und gleicht deren dritte Einwegwerte, welche bspw. durch nur einen Hashwert, aber auch durch mehrere Hashwerte gebildet sein können, erfindungsgemäß mit den ersten Einwegwerten, welche bspw. durch nur einen Hashwert, aber auch durch mehrere Hashwerte gebildet sein können, im Zertifikat ab. Auf diese Weise ist vorteilhaft ein sehr flexibles Authentifizierungssystem realisiert, welches nach und nach mit weiteren Usecases bzw. Authentifizierungsvorgängen ergänzt werden kann. Ein Datenschutz in dem erfindungsgemäßen System wird dadurch gewährleistet, dass der Nutzer die Daten für den angeforderten Usecase selbst freigibt. Der Nutzer kann dann später ggf. unterschiedliche Zertifikate für jeweilige Usecases erhalten, oder es können ggf. mehrere Usecases in einem Zertifikat kombiniert werden.

Voranstehend beschriebene Ausführungsformen des erfindungsgemäßen Verfahrens bzw. Ausgestaltungen des erfindungsgemäßen Systems für das Mobile-ID-Zertifikat stellen nur Beispiele für den Transport anonymisierter Daten im Mobile-ID-Zertifikat und die spätere Bereitstellung der Echtdaten dar. Anstelle der Identität können auch beliebige Daten im AIF transportiert werden. Eine weitere erfindungsgemäße Ausgestaltung ist ein Zutrittssystem, bei dem in dem mindestens einen AIF mindestens ein Zutrittseinwegwert zu Zugangsberechtigungen übergeben wird. Damit kann bei der späteren Verwendung nur das Zutrittssystem selbst prüfen, ob und wo der Inhaber des Mobile-ID-Zertifikats Zutritt erhält. Im Fall einer Zutrittsberechtigung werden hierzu die Zutrittseinwegwerte über Daten wie bspw.
- Zutrittsbereich;
- Datum/Uhrzeit von;
- Datum/Uhrzeit bis,
- Erteilt durch;
- usw.
gebildet.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

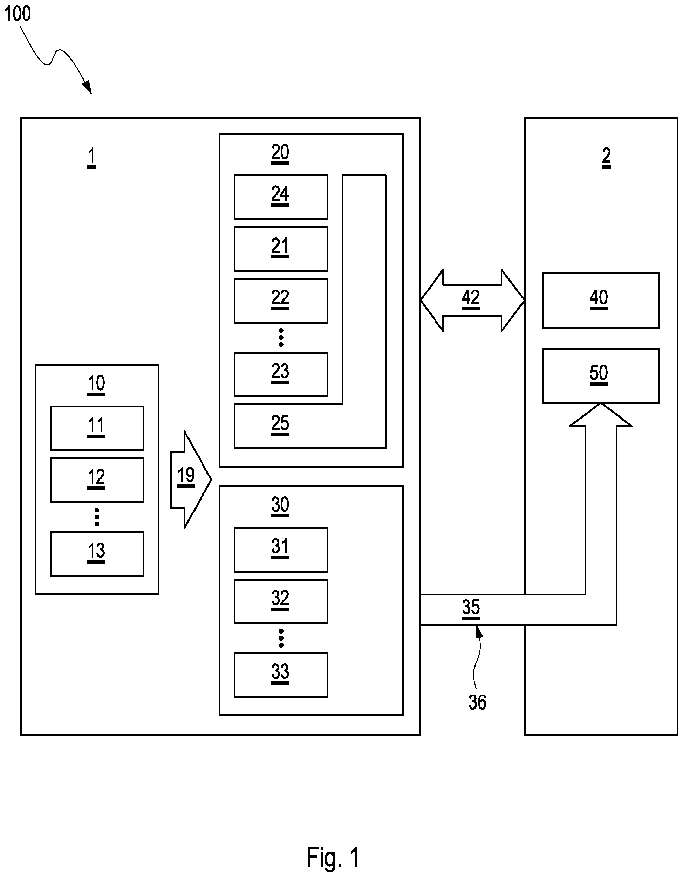

Figur 1 zeigt ein Blockdiagramm zu einer möglichen Nutzung einer Ausführungsform des erfindungsgemäßen Verfahrens.

In Figur 1 wird ein Ablaufdiagramm 100 zu einer möglichen Nutzung einer Ausführungsform des erfindungsgemäßen Verfahrens auf Basis von Hashwerten als Einwegwerten gezeigt. Ein Nutzer eines Endgerätes 1 authentisiert sich durch eine physische ID 10, bspw. einen Personalausweis, welche M Attribute 11, 12, 13 zu personenbezogenen Informationen als Daten₁ 11, Daten₂ 12 bis zu Daten_{M} 13 bereitstellt. Von diesen M Attributen 11, 12, 13 werden N den Nutzer eindeutig identifizierende Attribute (bspw. vorbestimmt als Vorname, Nachnahme, Geburtstag und Adresse) ausgewählt 19 und mittels einer Hashfunktion Hashwerte Hash(Mask(Daten₁)) 21, Hash(Mask(Daten₂)) 22 bis zu Hash(Mask(Daten_{N})) 23 über ggf. maskierte Daten abgeleitet und in ein Mobile-ID-Zertifikat 20 eingebunden, welches zusätzlich öffentliche Zertifikatdaten 24 und eine Signatur 25 enthält. Weiter werden auch Mobile-ID-Identifizierungsdaten 30 mit Daten₁ inklusive Maskierung 31, Daten₂ inklusive Maskierung 32 bis zu Daten_{N} inklusive Maskierung 33 gebildet. Während eine (externe) erste Entität 2 mittels des Mobile-ID-Zertifikates eine Authentifizierung 42 des Kommunikationsaustauschs mit dem Endgerät 1 des Nutzers durch eine Zertifikatsprüfung 40 durchführt, erfolgt eine Identifizierung 35 erst im weiteren Verlauf des Kommunikationsaustauschs nach einer dezidierten Nutzerzustimmung mit freigegebenen personenbezogenen Werten 36. Die externe erste Entität 2 führt hierzu eine Hashwertprüfung 50 als Nachberechnung einzelner Hashwerte, die gegebenenfalls maskiert sein können, aus.

### Bezugszeichenliste

- 100: Mobile-ID mit einem Zertifikat
- 1: Endgerät des Nutzers
- 2: Erste (externe) Entität
- 10: Physische ID
- 11: Daten₁
- 12: Daten₂
- 13: Daten_{M}
- 19: Ableitung
- 20: Mobile-ID-Zertifikat
- 21: Hash(Mask(Daten₁))
- 22: Hash(Mask(Daten₂))
- 23: Hash(Mask(Daten_{N}))
- 24: Öffentliche Zertifikatdaten
- 25: Signatur
- 30: Mobile-ID-Identifizierungsdaten
- 31: Daten₁ inkl. Maskierung
- 32: Daten₂ inkl. Maskierung
- 33: Daten_{N} inkl. Maskierung
- 35: Identifizierung
- 36: nach Nutzerzustimmung mit freigegebenen Werten
- 40: Zertifikatsprüfung
- 42: Authentifizierung/Kommunikationskanal
- 50: Maskierung und Hashwertprüfung über einzelne Hashwerte

## Patentansprüche

1. Verfahren (100) zur Authentifikation einer Mobile-ID, bei dem die Mobile-ID auf einem Endgerät (1) eines Nutzers bereitgestellt wird, bei dem zuerst personenbezogene Informationen (10) über den Nutzer mittels einer dem Endgerät (1) des Nutzers und einer ersten Entität (2) bekannten Einwegfunktion in eine anonymisierte Form (21, 22, 23) gebracht werden und mit einem einzigen Mobile-ID-Zertifikat (20) an die erste Entität (2) übermittelt werden, bei dem fortan mit diesem Mobile-ID-Zertifikat (20) ein Kommunikationsaustausch (42) zwischen dem Endgerät (1) des Nutzers und der ersten Entität (2) gekennzeichnet wird, bei dem zu einem späteren Zeitpunkt dem Nutzer eine Genehmigungsmöglichkeit zur Übermittlung der personenbezogenen Informationen (30) in nichtanonymisierter Form (31, 32, 33) an die erste Entität (2) bereitgestellt wird und bei dem durch die erste Entität (2) anhand der ihr dann übermittelten nichtanonymisierten personenbezogenen Informationen (30) eine Überprüfung (50) deren anonymisierter Form (21, 22, 23) durchgeführt wird, wobei folgende Schritte durchlaufen werden:
• Bereitstellen einer Mehrzahl von personenbezogenen Informationen (10) über eine Identität des Nutzers als eine Mehrzahl an Attributen (11, 12, 13);
• Berechnen von ersten Einwegwerten (21, 22, 23) mittels der bekannten Einwegfunktion über eine den Nutzer eindeutig identifizierende Auswahl (19) an jeweiligen Attributen aus der Mehrzahl an Attributen (11, 12, 13);
• Bilden einer eindeutigen Seriennummer (24) durch das Endgerät;
• Bilden des Mobile-ID-Zertifikates (20) mit der eindeutigen Seriennummer (24) und mindestens einem anonymisierten Informationsfeld, in dem die ersten Einwegwerte (21, 22, 23) abgelegt sind;
• Übermitteln des Mobile-ID-Zertifikates (20) von dem Endgerät (1) des Nutzers an die erste Entität (2);
• Erstellen eines sicheren Kommunikationskanals (42) zwischen dem Endgerät (1) des Nutzers und der ersten Entität (2) und/oder Authentifizieren (42) von Kommunikationsdaten mit dem Endgerät (1) des Nutzers durch die erste Entität (2) mittels des übermittelten Mobile-ID-Zertifikates;
• Abfrage einer Genehmigung des Nutzers auf einer Ausgabeeinheit des Endgerätes (1) zu einer Übermittlung personenbezogener Informationen (30) an die erste Entität (2);
• Genehmigen durch den Nutzer auf einer Eingabeeinheit des Endgerätes (1) und Übermitteln (36) personenbezogener Informationen (30) in nichtanonymisierter Form (31, 32, 33) an die erste Entität (2);
• Identifizieren (35) des Nutzers durch die erste Entität (2) mittels mit der Einwegfunktion nachberechneter zweiter Einwegwerten und deren Abgleich (50) mit den ersten Einwegwerten (21, 22, 23).

2. Verfahren nach Anspruch 1, bei dem die erste Entität (2) durch einen Online-Service (2) gebildet wird.

3. Verfahren nach Anspruch 2, bei dem der Online-Service (2) mindestens aus folgender Liste gewählt wird: E-Mail, Online-Shopping, Social Media, Online-Banking, loT, Carconnectivity, eTicketing.

4. Verfahren nach einem der voranstehenden Ansprüche, bei dem das Endgerät (1) mindestens aus folgender Liste gewählt wird: Smartphone, Smartwatch, Notebook, Laptop, Tablet, Navigationsgerät, GPS-Tracker, IoT-Device.

5. Verfahren nach einem der voranstehenden Ansprüche, bei dem die Einwegfunktion als eine Hashfunktion gewählt wird und die Einwegwerte (21, 22, 23) durch Hashwerte (21, 22, 23) gebildet werden.

6. Verfahren nach einem der voranstehenden Ansprüche, bei dem mindestens ein Teil der personenbezogenen Informationen (30) aus einem Ausweisdokument (10) oder von einem Identitätsprovider bzw. einem Identitätsservice entnommen wird, wobei diese mindestens aus folgender Liste gewählt werden: Personalausweis, Reisepass, Führerschein, Gesundheitskarte, Firmenausweis, Signaturkarte, Digitaler Fahrzeugschlüssel, eTicketing-Nutzermedium, Identitätsprovider (wie z. B. Verimi), User-Account eines Onlinesystems.

7. Verfahren nach einem der Ansprüche 2 bis 6, bei dem mindestens ein Teil der personenbezogenen Informationen (30) auf Grund von Auskünften des Nutzers über eine Eingabeeinheit des Endgerätes (1) auf vorgegebene Fragen des jeweiligen Online-Services auf einer Ausgabeeinheit des Endgerätes (1) gebildet wird, wobei die Attribute mindestens aus folgender Liste gewählt werden können: Telefonnummer, Telefonnummer als Kind, Straßenname des EIternhauses, Geburtsname der Mutter.

8. Verfahren nach einem der voranstehenden Ansprüche, bei dem die personenbezogenen Informationen (30) mindestens durch Attribute aus folgender Liste gebildet werden: vollständiger Name, Geburtsname, Geburtsdatum bzw. Geburtstag, physische private Adresse, physische berufliche Adresse, Mailadresse.

9. Verfahren nach einem der voranstehenden Ansprüche, bei dem die Einwegwerte mit einer Maskierungsfunktion maskiert werden, wobei ein die Maskierungsfunktion spezifizierender Funktionsdatensatz jedoch nicht die Daten zur Maskierung in dem Mobile-ID-Zertifikat hinterlegt wird.

10. Verfahren nach einem der voranstehenden Ansprüche, bei dem zusätzlich zu der Seriennummer (24) und dem mindestens einen anonymisierten Informationsfeld des Mobile-ID-Zertifikat eine URL abgelegt wird, wobei die URL auf ein dem Nutzer zugehöriges Datenkonto auf einer zweiten Entität verweist, wobei zuvor dritte Einwegwerte über einen dort abgelegten Extern-Datensatz dem mindestens einen anonymisierten Informationsfeld (21, 22, 23) des Mobile-ID-Zertifikates (20) zugefügt wurden, und wobei durch die erste Entität (2) vierte Einwegwerte über den unter der URL abgelegten Extern-Datensatz gebildet werden und mit den dritten Einwegwerten des Mobile-ID-Zertifikates (20) verglichen werden.

11. Verfahren nach Anspruch 10, bei dem die zweite Entität durch einen externen Datenserver oder Datenbankserver gebildet wird.

12. Verfahren nach einem der voranstehenden Ansprüche, bei dem der Kommunikationsaustausch (42) mit dem Mobile-ID-Zertifikat (20) verschlüsselt wird.

13. System zur Authentifikation einer Mobile-ID, welches mindestens ein Endgerät (1) eines Nutzers, eine erste Entität, eine von dem Endgerät (1) umfasste Ausgabeeinheit und eine von dem Endgerät (1) umfasste Eingabeeinheit aufweist, wobei das System dazu konfiguriert ist, die Mobile-ID auf dem Endgerät (1) des Nutzers bereitzustellen, zuerst personenbezogene Informationen (10) über den Nutzer mittels einer dem Endgerät (1) des Nutzers und der ersten Entität (2) bekannten Einwegfunktion in eine anonymisierte Form (21, 22, 23) zu bringen und mit einem einzigen Mobile-ID-Zertifikat (20) an die erste Entität (2) zu übermitteln, fortan mit diesem Mobile-ID-Zertifikat (20) ein Kommunikationsaustausch (42) zwischen dem Endgerät (1) des Nutzers und der ersten Entität (2) zu kennzeichnen, zu einem späteren Zeitpunkt dem Nutzer eine Genehmigungsmöglichkeit zur Übermittlung der personenbezogenen Informationen (30) in nichtanonymisierter Form (31, 32, 33) an die erste Entität (2) bereitzustellen und durch die erste Entität (2) anhand der ihr dann übermittelten nichtanonymisierten personenbezogenen Informationen (30) eine Überprüfung deren anonymisierter Form (21, 22, 23) durchzuführen, und dabei folgende Schritte zu durchlaufen:
• Bereitstellen einer Mehrzahl von personenbezogenen Informationen (10) über eine Identität des Nutzers als eine Mehrzahl an Attributen (11, 12, 13);
• Berechnen von ersten Einwegwerten (21, 22, 23) mittels der Einwegfunktion über eine den Nutzer eindeutig identifizierende Auswahl (19) an jeweiligen Attributen aus der Mehrzahl an Attributen (11, 12, 13);
• Bilden einer eindeutigen Seriennummer (24) durch das Endgerät;
• Bilden des Mobile-ID-Zertifikates (20) mit der eindeutigen Seriennummer (24) und mindestens einem anonymisierten Informationsfeld, in dem die ersten Einwegwerte (21, 22, 23) abgelegt sind;
• Übermitteln des Mobile-ID-Zertifikates (20) von dem Endgerät (1) des Nutzers an die erste Entität (2);
• Erstellen eines sicheren Kommunikationskanals (42) zwischen dem Endgerät (1) des Nutzers und der ersten Entität (2) und/oder Authentifizieren (42) von Kommunikationsdaten mit dem Endgerät (1) des Nutzers durch die erste Entität (2) mittels des übermittelten Mobile-ID-Zertifikates;
• Abfragen einer Genehmigung des Nutzers auf einer Ausgabeeinheit des Endgerätes (1) zu einer Übermittlung personenbezogener Informationen (30) an die erste Entität (2);
• Genehmigen durch den Nutzer auf einer Eingabeeinheit des Endgerätes (1) und Übermitteln (36) personenbezogener Informationen (30) in nichtanonymisierter Form (31, 32, 33) an die erste Entität (2);
• Identifizieren (35) des Nutzers durch die erste Entität (2) mittels mit der Einwegfunktion nachberechneten zweiten Einwegwerten und deren Abgleich (50) mit den ersten Einwegwerten (21, 22, 23).

14. System nach Anspruch 13, welches zusätzlich eine zweite Entität aufweist, bei dem das System dazu konfiguriert ist, zu der Seriennummer (24) und dem mindestens einen anonymisierten Informationsfeld (21, 22, 23) eine URL in dem Mobile-ID-Zertifikat (20) abzulegen, wobei die URL auf ein dem Nutzer zugehöriges Datenkonto auf der zweiten Entität verweist und zuvor dritte Einwegwerte über einen dort abgelegten Extern-Datensatz dem mindestens einen anonymisierten Informationsfeld (21, 22, 23) des Mobile-ID-Zertifikates zugefügt wurden, und wobei durch die erste Entität (2) vierte Einwegwerte über den unter der URL abgelegten Extern-Datensatz gebildet werden und mit den dritten Einwegwerten des Mobile-ID-Zertifikates (20) verglichen werden.

## Claims

1. A method (100) for authenticating a mobile ID, wherein the mobile ID is provided on a user terminal (1), wherein, firstly, personal information (10) about the user is put into an anonymized form (21, 22, 23) by means of a one-way function known to the user terminal (1) and a first entity (2) and transmitted to the first entity (2) by means of a single mobile ID certificate (20), wherein, henceforth, a communication exchange (42) between the user terminal (1) and the first entity (2) is designated by means of this mobile ID certificate (20), wherein, at a later time, the user is provided with an authorization option for transmitting the personal information (30) in non-anonymized form (31, 32, 33) to the first entity (2), and wherein the first entity (2) uses the non-anonymized personal information (30) thus transmitted to it to carry out a check (50) of its anonymized form (21, 22, 23), wherein the following steps are carried out:
• Providing a plurality of personal information (10) about an identity of the user as a plurality of attributes (11, 12, 13);
• Calculating first one-way values (21, 22, 23) by means of the known one-way function via a selection (19) of respective attributes from the plurality of attributes (11, 12, 13), wherein said selection uniquely identifies the user;
• Generating a unique serial number (24) by the terminal;
• Generating the mobile ID certificate (20) with the unique serial number (24) and at least one anonymized information field in which the first one-way values (21, 22, 23) are stored;
• Transmitting the mobile ID certificate (20) from the user terminal (1) to the first entity (2);
• Establishing a secure communication channel (42) between the user terminal (1) and the first entity (2) and/or authenticating (42) communication data with the user terminal (1) by the first entity (2) by means of the transmitted mobile ID certificate;
• Requesting an authorization by the user on an output unit of the terminal (1) for a transmission of personal information (30) to the first entity (2);
• Authorizing by the user on an input unit of the terminal (1) and transmitting (36) personal information (30) in non-anonymized form (31, 32, 33) to the first entity (2);
• Identifying (35) the user by the first entity (2) by means of second one-way values recalculated with the one-way function and matching (50) them with the first one-way values (21, 22, 23).

2. The method according to claim 1, wherein the first entity (2) is formed by an online service (2).

3. The method according to claim 2, wherein the online service (2) is selected at least from the following list: Email, online shopping, social media, online banking, loT, car connectivity, eTicketing.

4. The method according to one of the preceding claims, wherein the terminal (1) is selected at least from the following list: Smartphone, smartwatch, notebook, laptop, tablet, navigation device, GPS tracker, loT device.

5. The method according to one of the preceding claims, wherein the one-way function is selected as a hash function and the one-way values (21, 22, 23) are formed by hash values (21, 22, 23).

6. The method according to one of the preceding claims, wherein at least part of the personal information (30) is taken from an identification document (10) or from an identity provider or identity service, wherein these are selected at least from the following list: ID card, passport, driver's license, health card, company ID card, signature card, digital vehicle key, eTicketing user medium, identity provider (such as Verimi), user account of an online system.

7. The method according to one of claims 2 to 6, wherein at least part of the personal information (30) is formed on the basis of information provided by the user via an input unit of the terminal (1) in response to predetermined questions of the respective online service on an output unit of the terminal (1), wherein the attributes can be selected at least from the following list: Phone number, phone number during childhood, street name of parents' house, mother's maiden name.

8. The method according to one of the preceding claims, wherein the personal information (30) is formed at least by attributes from the following list: full name, birth name, date of birth or birthday, physical private address, physical professional address, mail address.

9. The method according to one of the preceding claims, wherein the one-way values are masked with a masking function, wherein a function record specifying the masking function, but not the data for masking, is stored in the mobile ID certificate.

10. The method according to one of the preceding claims, wherein, in addition to the serial number (24) and the at least one anonymized information field of the mobile ID certificate, a URL is stored, wherein said URL links to a data account associated with the user on a second entity, wherein third one-way values were previously added to the at least one anonymized information field (21, 22, 23) of the mobile ID certificate (20) via an external data record stored there, and wherein fourth one-way values are formed by the first entity (2) via the external data record stored under the URL and are compared with the third one-way values of the mobile ID certificate (20).

11. The method according to claim 10, wherein the second entity is formed by an external data server or database server.

12. The method according to one of the preceding claims, wherein the communication exchange (42) is encrypted with the mobile ID certificate (20).

13. A system for authenticating a mobile ID, having at least one user terminal (1), a first entity, an output unit comprised by the terminal (1) and an input unit comprised by the terminal (1), wherein the system is configured to provide the mobile ID on the user terminal (1), to first put personal information (10) about the user into an anonymized form (21, 22, 23) by means of a one-way function known to the user terminal (1) and the first entity (2) and to transmit it to the first entity (2) with a single mobile ID certificate (20), henceforth, to designate by means of this mobile ID certificate (20) a communication exchange (42) between the user terminal (1) and the first entity (2), at a later time, to provide the user with an authorization option for transmitting the personal information (30) in non-anonymized form (31, 32, 33) to the first entity (2) and to use, byhave the first entity (2), using the non-anonymized personal information (30) thuswhich is at that moment transmitted to it to carry out, perform a check (50) of its anonymized form (21, 22, 23) and, while doing so, to carry out the following steps:
• Providing a plurality of personal information (10) about an identity of the user as a plurality of attributes (11, 12, 13);
• Calculating first one-way values (21, 22, 23) by means of the one-way function via a selection (19) of respective attributes from the plurality of attributes (11, 12, 13), wherein said selection uniquely identifies the user;
• Generating a unique serial number (24) by the terminal;
• Generating the mobile ID certificate (20) with the unique serial number (24) and at least one anonymized information field in which the first one-way values (21, 22, 23) are stored;
• Transmitting the mobile ID certificate (20) from the user terminal (1) to the first entity (2);
• Establishing a secure communication channel (42) between the user terminal (1) and the first entity (2) and/or authenticating (42) communication data with the user terminal (1) by the first entity (2) by means of the transmitted mobile ID certificate;
• Requesting an authorization by the user on an output unit of the terminal (1) for a transmission of personal information (30) to the first entity (2);
• Authorizing by the user on an input unit of the terminal (1) and transmitting (36) personal information (30) in non-anonymized form (31, 32, 33) to the first entity (2);
• Identifying (35) the user by the first entity (2) by means of second one-way values recalculated with the one-way function and matching (50) them with the first one-way values (21, 22, 23).

14. The system according to claim 13, further comprising a second entity, wherein the system is configured to store a URL in the mobile ID certificate (20) alongside the serial number (24) and the at least one anonymized information field (21, 22, 23), wherein the URL links to a data account associated with the user on the second entity, wherein third one-way values were previously added to the at least one anonymized information field (21, 22, 23) of the mobile ID certificate via an external data record stored there, and wherein fourth one-way values are formed by the first entity (2) via the external data record stored under the URL and are compared with the third one-way values of the mobile ID certificate (20).

## Revendications

1. Procédé (100) d'authentification d'un ID mobile, dans lequel l'ID mobile est mis à disposition sur un périphérique (1) d'un utilisateur, dans lequel des informations personnelles (10) concernant l'utilisateur sont d'abord transformées en une forme anonyme (21, 22, 23) au moyen d'une fonction unidirectionnelle connue du périphérique (1) de l'utilisateur et d'une première entité (2) et transmises à la première entité (2) avec un certificat d'ID mobile (20) unique, dans lequel ce certificat d'ID mobile (20) est destiné désormais à caractériser un échange de communication (42) entre le périphérique (1) de l'utilisateur et la première entité (2), dans lequel, à un moment ultérieur, une possibilité d'approuver la transmission des informations personnelles (30) qui ne sont pas rendues anonymes (31, 32, 33) à la première entité (2) est accordée à l'utilisateur et dans lequel la première entité (2) procède à une vérification (50) des informations anonymes (21, 22, 23) à l'aide des informations personnelles (30) qui lui ont été transmises sous la forme non anonyme, les étapes suivantes étant réalisées :
• mise à disposition d'une pluralité d'informations personnelles (10) concernant une identité de l'utilisateur sous la forme d'une pluralité d'attributs (11, 12, 13) ;
• calcul des premières valeurs unidirectionnelles (21, 22, 23), au moyen de la fonction unidirectionnelle connue, par l'intermédiaire d'une sélection (19) d'attributs, qui identifient clairement l'utilisateur, parmi la pluralité d'attributs (11, 12, 13);
• création d'un numéro de série (24) unique par le périphérique ;
• création du certificat d'ID mobile (20) comportant le numéro de série (24) unique et au moins un champ d'information anonyme, dans lequel les premières valeurs unidirectionnelles (21,22, 23) sont stockées ;
• transmission du certificat d'ID mobile (20) du périphérique (1) de l'utilisateur à la première entité (2) ;
• établissement d'un canal de communication (42) sécurisé entre le périphérique (1) de l'utilisateur et la première entité (2) et/ou authentification (42) de données de communication avec le périphérique (1) de l'utilisateur par la première entité (2) au moyen du certificat d'ID mobile transmis ;
• demande d'une approbation de l'utilisateur sur une unité de sortie du périphérique (1) pour une transmission d'informations personnelles (30) à la première entité (2) ;
• approbation par l'utilisateur sur une unité d'entrée du périphérique (1) et transmission (36) d'informations personnelles (30) sous la forme non anonyme (31,32, 33) à la première entité (2) ;
• identification (35) de l'utilisateur par la première entité (2) au moyen des deuxièmes valeurs unidirectionnelles calculées ultérieurement à l'aide de la fonction unidirectionnelle et la comparaison (50) de celles-ci avec les premières valeurs unidirectionnelles (21, 22, 23).

2. Procédé selon la revendication 1, dans lequel la première entité (2) est formée par un service en ligne (2).

3. Procédé selon la revendication 2, dans lequel le service en ligne (2) est choisi au moins dans la liste suivante : messagerie électronique, shopping en ligne, réseaux sociaux, banking en ligne, IoT, Carconnectivity, eTicketing.

4. Procédé selon l'une des revendications précédentes, dans lequel le périphérique (1) est choisi au moins dans la liste suivante : smartphone, montre connectée, notebook, ordinateur portable, tablette, appareil de navigation, traceur GPS, dispositif IoT.

5. Procédé selon l'une des revendications précédentes, dans lequel la fonction unidirectionnelle est choisie en tant que fonction de hachage et les valeurs unidirectionnelles (21, 22, 23) sont formées par les valeurs de hachage (21, 22, 23).

6. Procédé selon l'une des revendications précédentes, dans lequel au moins une partie des informations personnelles (30) est tirée d'une pièce d'identité (10) ou d'un fournisseur d'identités ou d'un service d'identités, le choix étant opéré au moins dans la liste suivante : pièce d'identité, passeport, permis de conduire, carte santé, pièce d'entreprise, carte de signature, clé automobile numérique, support d'utilisateur eTicketing, fournisseur d'identités (par exemple, Verimi), compte d'utilisateur d'un système en ligne.

7. Procédé selon l'une des revendications 2 à 6, dans lequel au moins une partie des informations personnelles (30) est constituée sur la base des renseignements de l'utilisateur par l'intermédiaire d'une unité d'entrée du périphérique (1) en réponse à des questions prédéfinies du service en ligne correspondant sur une unité de sortie du périphérique (1), les attributs pouvant être choisis au moins dans la liste suivante : numéro de téléphone, numéro de téléphone enfant, rue de la maison parentale, nom de la mère à la naissance.

8. Procédé selon l'une des revendications précédentes, dans lequel les informations personnelles (30) sont constituées au moins par des attributs choisis dans la liste suivante : nom complet, nom à la naissance, date ou jour de naissance, adresse physique privée, adresse physique professionnelle, adresse électronique.

9. Procédé selon l'une des revendications précédentes, dans lequel les valeurs unidirectionnelles sont masquées par une fonction de masquage, sachant qu'un ensemble de données de fonction spécifiant la fonction de masquage est stocké dans le certificat d'ID mobile, mais pas les données de masquage.

10. Procédé selon l'une des revendications précédentes, dans lequel une URL est stockée en plus du numéro de série (24) et de l'au moins un champ d'information anonyme du certificat d'ID mobile, sachant que l'URL renvoie à un compte de données appartenant à l'utilisateur sur une deuxième entité, les troisièmes valeurs unidirectionnelles ayant été préalablement ajoutées, par le biais d'un ensemble de données externes stockées, à l'au moins un champ d'information anonyme (21,22, 23) du certificat d'ID mobile (20), et des quatrièmes valeurs unidirectionnelles étant formées par la première entité (2) par le biais de l'ensemble de données externes stockées sous l'URL et comparées avec les troisièmes valeurs unidirectionnelles du certificat d'ID mobile (20).

11. Procédé selon la revendication 10, dans lequel la deuxième entité est formée par un serveur de données externe ou un serveur de base de données externe.

12. Procédé selon l'une des revendications précédentes, dans lequel l'échange de communication (42) avec le certificat d'ID mobile (20) est crypté.

13. Système d'authentification d'un ID mobile, présentant au moins un périphérique (1) d'un utilisateur, une première entité, une unité de sortie comprise dans le périphérique (1) et une unité d'entrée comprise dans le périphérique (1), ledit système étant configuré pour fournir l'ID mobile sur le périphérique (1) de l'utilisateur, pour rendre d'abord anonymes (21, 22, 23) des informations personnelles (10) concernant l'utilisateur au moyen d'une fonction unidirectionnelle connue du périphérique (1) de l'utilisateur et de la première entité (2) et les transmettre avec un certificat d'ID mobile (20) unique à la première entité (2), pour repérer ensuite avec ce certificat d'ID mobile (20) un échange de communication (42) entre le périphérique (1) de l'utilisateur et la première entité (2), pour accorder à un moment ultérieur à l'utilisateur une possibilité d'approuver la transmission de ses informations personnelles (30) sous la forme non anonyme (31, 32, 33) à la première entité (2) et pour réaliser une vérification de la forme anonyme (21, 22, 23) des informations par la première entité (2) à l'aide des informations personnelles (30) non anonymes qui lui ont été transmises, et réaliser notamment les étapes suivantes :
• mise à disposition d'une pluralité d'informations personnelles (10) concernant une identité de l'utilisateur sous la forme d'une pluralité d'attributs (11, 12, 13) ;
• calcul de premières valeurs unidirectionnelles (21, 22, 23) au moyen de la fonction unidirectionnelle par l'intermédiaire d'une sélection (19) d'attributs, qui identifient clairement l'utilisateur, parmi la pluralité d'attributs (11, 12, 13) ;
• création d'un numéro de série (24) unique par le périphérique ;
• création du certificat d'ID mobile (20) comportant le numéro de série (24) unique et au moins un champ d'information anonyme, dans lequel les premières valeurs unidirectionnelles (21,22, 23) sont stockées ;
• transmission du certificat d'ID mobile (20) du périphérique (1) de l'utilisateur à la première entité (2) ;
• établissement d'un canal de communication (42) sécurisé entre le périphérique (1) de l'utilisateur et la première entité (2) et/ou authentification (42) de données de communication avec le périphérique (1) de l'utilisateur par la première entité (2) au moyen du certificat d'ID mobile transmis ;
• demande d'une approbation de l'utilisateur sur une unité de sortie du périphérique (1) pour une transmission d'informations personnelles (30) à la première entité (2) ;
• approbation par l'utilisateur sur une unité d'entrée du périphérique (1) et transmission (36) d'informations personnelles (30) sous la forme non anonyme (31,32, 33) à la première entité (2) ;
• identification (35) de l'utilisateur par la première entité (2) au moyen des secondes valeurs unidirectionnelles calculées ultérieurement à l'aide de la fonction unidirectionnelle et la comparaison (50) de celles-ci avec les premières valeurs unidirectionnelles (21, 22, 23).

14. Système selon la revendication 13, présentant en outre une deuxième entité, ledit système étant configuré pour stocker une URL dans le certificat d'ID mobile (20) pour le numéro de série (24) et l'au moins un champ d'information anonyme (21, 22, 23), sachant que l'URL renvoie à un compte de données appartenant à l'utilisateur sur la deuxième entité et que les troisièmes valeurs unidirectionnelles ont été ajoutées au préalable à l'au moins un champ d'information anonyme (21, 22, 23) du certificat d'ID mobile par le biais d'un ensemble de données externes stockées, et que les quatrièmes valeurs unidirectionnelles sont formées par la première entité (2) par le biais de l'ensemble de données externes stockées sous l'URL et comparées avec les troisièmes valeurs unidirectionnelles du certificat d'ID mobile (20).
